# EUROPEAN PATENT APPLICATION

(11) **EP 4 628 739 A1**
(43) Date of publication of application: **08.10.2025**
(21) Application number: 24796540.3
(22) Date of filing: 21.02.2024
(51) Int. Cl.: F16C 11/06

(54) **BALL JOINT MANUFACTURING METHOD**

(30) Priority: 27.04.2023 JP 2023073290
(71) Applicant: SOMIC MANAGEMENT HOLDINGS INC., Sumida-ku, Tokyo 130-0004 (JP)
(72) Inventor: ODA, Yuki, Hamamatsu-shi, Shizuoka 435-8560 (JP)
(74) Representative: Lewis Silkin LLP
(86) International application number: PCT/JP2024/006250
(87) International publication number: WO 2024/224781

(57) **Abstract**

To provide a ball joint manufacturing method capable of achieving both improvement of detachment strength and torque reduction while reducing man-hours and cost. A swaged part (11) is formed by deforming a portion of an intermediary body (20) by swaging that houses a bearing sheet (10) and a ball part (16) therein to configure a housing (2) holding the bearing sheet (10) where the ball part (16) is rotatably held. A heat treatment is performed on a region including at least a portion of the swaged part (11) by applying laser (23) to an outer side part of the housing (2).

## Description

### Technical Field

This invention relates to a method of manufacturing a ball joint including a bearing sheet made of synthetic resin housed in a metallic housing.

### Background Art

In a ball joint used for a vehicle such as an automobile, for example, a bearing sheet made of synthetic resin where a ball part of a ball stud is rotatably held is housed in a circular cylindrical metallic housing, and a portion of the housing is deformed by swaging, whereby the bearing sheet is held together with the ball part in a manner of preventing detachment from the housing (see PTL 1, for example).

In the conventional ball joint, countermeasures against failure of detachment of the ball stud (ball part) from the housing include a method of increasing the hardness of the housing by performing a heat treatment (quenching) on the housing entirely, and a method of ensuring strength by increasing the size (thickness) of the housing.

In order to improve performance in assembling a vehicle, the ball joint is required to realize torque reduction. As a method of realizing torque reduction, a heat treatment (annealing treatment) is performed on the bearing sheet with the bearing sheet and the ball part assembled with the housing. This removes residual stress in the synthetic resin forming the bearing sheet to stabilize dimensional accuracy (see PTL 2, for example).

### Citation List

### Patent Literature

PTL 1: Japanese Patent No. 5168574
PTL 2: Japanese Patent No. 5975531

### Summary of Invention

### Technical Problem

If the above-described methods are employed for taking countermeasures against the detachment failure of the ball stud, the heat treatment is required to be performed at a high temperature in order to organize a metallographic structure forming the housing. This requires a large quantity of energy and time for heating and cooling.

In the case of the heat treatment for torque reduction, the bearing sheet housed in the housing is required to be heated through a socket. This requires a larger quantity of energy and longer heating time than in the case of heating the bearing sheet made of the synthetic resin alone.

To perform both of these heat treatments, while the heat treatment is performed in a high-temperature range in the former case, the heat treatment is performed in an intermediate temperature range of not causing melting of the synthetic resin in the latter case. Hence, it is difficult for these treatments to be performed simultaneously due to such a difference in heat treatment temperature. This requires the treatments to be performed separately and requires a burden such as transfer between facilities for performing the treatments.

Thus, a need arises to achieve both the prevention of detachment of the ball part and torque reduction while reducing man-hours and cost. Such a problem also occurs in a ball joint to be used for a purpose other than a vehicle.

This invention has been made in view of these matters, and is intended to provide a ball joint manufacturing method capable of achieving both improvement of detachment strength and torque reduction while reducing man-hours and cost.

### Solution to Problem

A ball joint manufacturing method described in claim 1 is a ball joint manufacturing method of manufacturing a ball joint including a metallic housing having an opening part, a bearing sheet made of synthetic resin housed in the housing, and a ball part rotatably held by the bearing sheet. A swaged part is formed by deforming a portion of an intermediary body by swaging that houses the bearing sheet and the ball part therein to configure the housing holding the bearing sheet where the ball part is rotatably held. A heat treatment is performed on a region including at least a portion of the swaged part by applying laser to an outer side part of the housing.

According to a ball joint manufacturing method described in claim 2, in the ball joint manufacturing method described in claim 1, the heat treatment is performed on the outer side part of the housing by applying the laser to the region including at least the portion of the swaged part from the side of the opening part.

According to a ball joint manufacturing method described in claim 3, in the ball joint manufacturing method described in claim 1 or 2, the laser is applied to the outer side part of the housing along a perimeter thereof at least once while the housing is rotated.

According to a ball joint manufacturing method described in claim 4, in the ball joint manufacturing method described in claim 3, the laser is of a quadrangular shape having a width in at least one of an axis direction and a rotary direction of the housing.

### Advantageous Effects of Invention

According to the ball joint manufacturing method described in claim 1, detachment strength can be improved and torque can be reduced only through a step of applying the laser, making it possible to achieve both improvement of detachment strength and torque reduction while reducing man-hours and cost.

The ball joint manufacturing method described in claim 2 makes it possible to perform quenching directly and reliably on at least the portion of the swaged part in addition to fulfilling the effect of the ball joint manufacturing method described in claim **1.**

The ball joint manufacturing method described in claim 3 makes it possible to apply the laser easily to the entire perimeter of the housing in addition to fulfilling the effect of the ball joint manufacturing method described in claim 1 or 2.

The ball joint manufacturing method described in claim 4 makes it possible to perform the heat treatment efficiently in a short time by adjusting the width of the laser in response to the size of the housing in addition to fulfilling the effect of the ball joint manufacturing method described in claim 3.

### Brief Description of Drawings

[Fig. 1] Fig. 1(a) is a side view, Fig. 1(b) is a front view, and Fig. 1(c) is a sectional view showing a heat treatment step of a ball joint manufacturing method according to one embodiment of this invention.
[Fig. 2] Fig. 2 is a sectional view showing an assembling step of the ball joint manufacturing method.
[Fig. 3] Fig. 3 is a sectional view showing a state where a bearing sheet and a ball part are assembled with an intermediary body by the assembling step of the ball joint manufacturing method.
[Fig. 4] Fig. 4 is a sectional view showing a swaging deformation step of the ball joint manufacturing method.

### Description of Embodiments

An embodiment of this invention will be described below by referring to the drawings.

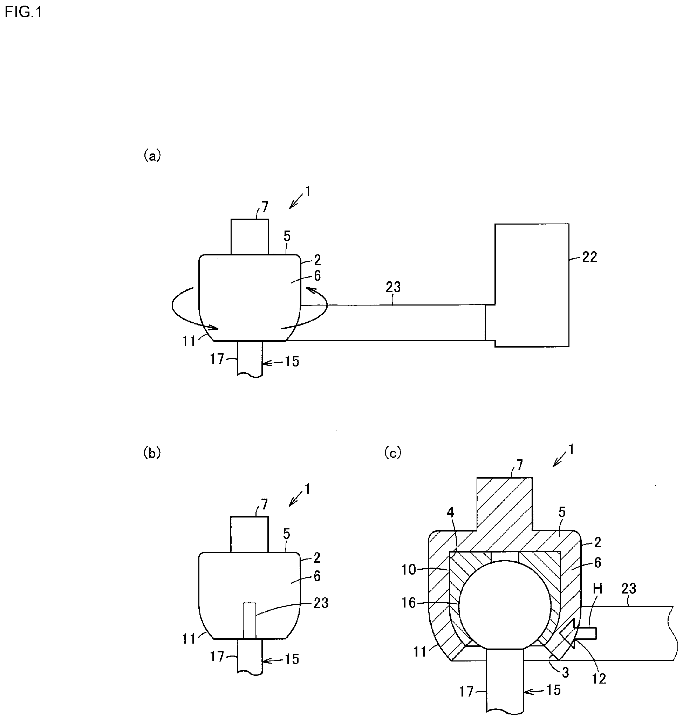

Referring to Fig. 1(c), a reference number 1 denotes a ball joint. In this embodiment, a vehicle ball joint used for a suspension device, a steering device or the like of a vehicle such as an automobile is explained as an example of the ball joint 1. In particular, in the illustrated example, an inner ball joint (IBJ) used for a rack end of a steering device is explained as an example.

The ball joint 1 includes a housing 2. The housing 2 is also called a socket or the like. The housing 2 is made of metal and manufactured by forging, casting, or the like. The housing 2 is formed into a circular cylindrical shape having an opening part 3 provided at least at one end portion thereof. In this embodiment, the housing 2 is formed into a circular cylindrical shape with a closed bottom. Specifically, the housing 2 has the opening part 3 at the one end portion thereof, and is closed at the other end portion thereof, and an inner chamber 4 communicating with the opening part 3 is formed in the housing 2. Specifically, the housing 2 of this embodiment has a bottom part 5 closing the other end portion, and a circular cylindrical side wall part 6 standing from an outer edge of the bottom part 5 that are integrated with each other. The bottom part 5 is provided with a connection part 7 projecting therefrom. The connection part 7 is a part for connecting the ball joint 1 to a different member that is a rack bar, for example. The connection part 7 is a male screw part formed coaxially with the housing 2 and projecting in a circular columnar shape.

A bearing sheet 10 as a sliding member is housed in the inner chamber 4. The bearing sheet 10 is also called a ball sheet or the like. The bearing sheet 10 is made of synthetic resin with excellent wear resistance. The bearing sheet 10 is formed into a circular cylindrical shape to be fitted in the inner chamber 4. The bearing sheet 10 may be composed of one part or may be composed of a plurality of parts. At an edge of the opening part 3 of the housing 2, the bearing sheet 10 is prevented from being detached from the inner chamber 4 of the housing 2 by a swaged part 11 formed at an end portion of the side wall part **6.** The swaged part 11 is formed by deforming the side wall part 6 by swaging toward an inner side of the housing 2, namely, toward a center axis of the housing 2 from outside toward the inner side. By the formation of the swaged part 11, the side wall part 6 is bent in such a manner as to gradually decrease in diameter toward the one end portion. A hardened part 12 is formed at an outer side part of the housing **2.** The hardened part 12 is formed in a thin film shape on a surface of the housing 2 and is formed into higher hardness than the other part (ordinary part) of the housing 2. In this embodiment, the hardened part 12 is formed in a region of the outer side part of the housing 2 including at least a portion of the swaged part 11. In the illustrated example, the hardened part 12 is formed in a region of the side wall part 6 of the housing 2 on the side of the opening part 3 and including the swaged part 11 entirely in such a manner as to extend continuously over an entire perimeter. The hardened part 12 is formed by a heat treatment (quenching). Formation of the hardened part 12 will be described later in detail.

A ball stud 15 as a ball-side member is held by the bearing sheet 10. The ball stud 15 is a connection member for connecting the ball joint 1 to a different member. The ball stud 15 has a spherical ball part 16. The ball part 16 is made of steel or the like, for example. The ball part 16 is rotatably held by the bearing sheet 10. A lubricant is provided between an outer peripheral surface of the ball part 16 and an inner peripheral surface of the bearing sheet 10. The ball part 16 is located in the inner chamber 4 of the housing 2 together with the bearing sheet 10. Namely, the ball part 16 is rotatably held inside the housing **2.**

The ball part 16 is provided with a stud part 17 projecting therefrom. The stud part 17 is made of steel or the like, for example. The stud part 17 is a part to be subjected to the application of a load by being connected to a different member. The stud part 17 is formed into a circular columnar shape. The stud part 17 is integrally arranged at the top of the ball part 16. The stud part 17 is arranged coaxially or substantially coaxially with the ball part 16. Specifically, a center axis of the stud part 17 is arranged in such a manner as to pass through the center or a substantially central point of the ball part 16. The stud part 17 projects to the outside of the housing 2 via the opening part **3.** The stud part 17 has a tip portion functioning as a connection part to be connected to a different member. The connection part is a male screw part formed at an outer peripheral surface of the tip portion of the stud part 17, for example, and can be fastened to the different member. In this embodiment, the connection part is threadedly engaged with a tire side such as a tie rod, for example. The stud part 17 may be formed integrally with the ball part 16, or may be integrally coupled by welding or the like to the ball part 16. The stud part 17 and the housing 2 are covered by a dust cover (boot) for stopping the entry of dust.

A method of manufacturing the ball joint 1 will be described next.

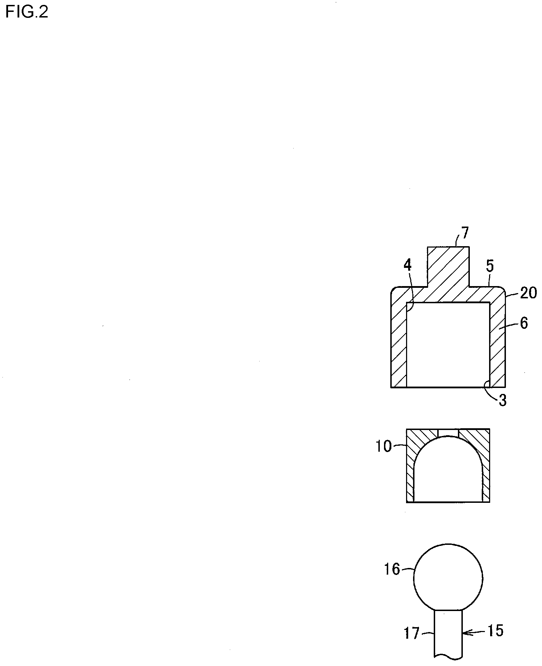

As shown in Fig. 2, the bearing sheet 10 and the ball part 16 (ball stud 15) are first assembled with an intermediary body 20 having been prepared in advance by forging or the like and then shaped by cutting or the like (assembling step). In the illustrated example in the drawing, the ball part 16 of the ball stud 15 is assembled after the ball part 16 and the stud part 17 are coupled to each other in advance. Alternatively, the ball part 16 alone may be assembled and the stud part 17 may be coupled by welding or the like to the ball part 16 in a subsequent step. The intermediary body 20 is a metallic body having the bottom part 5 and the side wall part 6 in a state yet to be deformed and forming the housing 2, and is shaped into a circular cylindrical form. The bearing sheet 10 and the ball part 16 are assembled by being inserted into the intermediary body 20 via the opening part 3 of the intermediary body 20. The ball part 16 may be inserted into the bearing sheet 10 after the bearing sheet 10 is inserted into the intermediary body 20. Alternatively, the bearing sheet 10 holding the ball part 16 may be inserted into the intermediary body 20. Regarding the lubricant between the bearing sheet 10 and the ball part 16, the ball part 16 with the lubricant applied to a surface thereof may be inserted into the bearing sheet 10, or the lubricant may be applied after the ball part 16 is assembled with the bearing sheet 10. In another case, the ball part 16 may be assembled with the bearing sheet 10 after the lubricant is applied to the bearing sheet 10.

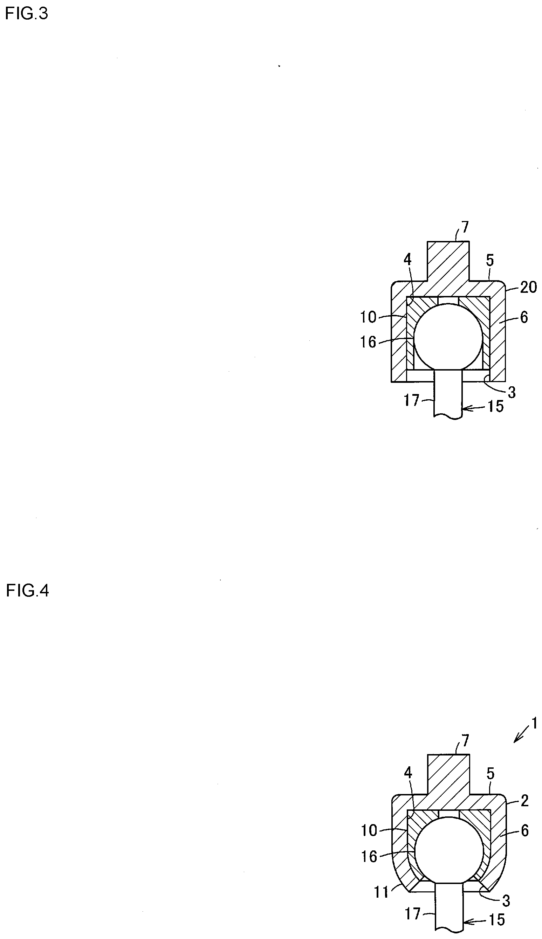

Next, a portion of the intermediary body 20 including the assembled bearing sheet 10 and ball part 16 as shown in Fig. 3, or a tip portion of the side wall part 6 in this embodiment is deformed by swaging toward the center axis side to form the swaged part 11 as shown in Fig. 4, thereby configuring the housing 2 holding the bearing sheet 10 where the ball part 16 is rotatably held (swaging deformation step) . The swaged part 11 is formed by bending the tip portion of the side wall part 6 of the housing 2 using swaging means in such a manner that the tip portion projects toward the inner side. This swaging deformation of the swaged part 11 makes an outer peripheral surface of the bearing sheet 10 tightly contact the inner chamber 4 of the housing 2, thereby applying pre-load on the bearing sheet 10.

Next, this housing 2 is set on a rotator. Then, as shown in Fig. 1(a), laser 23 is applied from a laser irradiator 22 to the outer side part of the housing 2 while the housing 2 is rotated about the center axis, thereby performing a heat treatment on a region including at least a portion of the swaged part 11 (heat treatment step).

The laser 23 is of a quadrangular shape having a width in at least one of an axis direction of the housing 2 and a rotary direction of the housing 2. As shown in Fig. 1(b), in this embodiment, the laser 23 is of a quadrangular shape having a width in each of the axis direction and the rotary direction of the housing 2 in a front view, which is a shape obtained by dividing the side wall part 6 of the housing 2 into a predetermined width in a peripheral direction thereof. An area of application of the laser 23 is optionally changeable in response to the size of the housing 2 (ball joint 1), etc. The intensity of the laser 23 to be applied (the quantity of energy for heating) is optionally settable, and the laser 23 is applied at a constant or substantially constant intensity thereby set.

The laser 23 is applied to the side wall part 6 of the housing 2 as the outer side part. Preferably, as shown in Fig. 1(c), the laser 23 is applied from the side of the opening part 3 to the region including at least the portion of the swaged part 11. However, the laser 23 may be applied to any position as long as application to this position allows the region including at least the portion of the swaged part 11 to be subjected to a heat treatment by heat transfer through the housing 2. By applying the laser 23 to the housing 2 along a perimeter thereof at least once, an effect comparable to that fulfilled by quenching is generated at a position on the surface of the housing 2 where the laser 23 is applied. This forms the hardened part 12 like a thin film on the surface of the housing 2, thereby improving strength against detachment of the ball part 16, namely, improving detachment strength. Heat H generated by this treatment is rapidly heat-transferred toward the side of the inner chamber 4 of the housing 2 by means of heat propagation. This generates an effect comparable to that fulfilled by an annealing treatment by which the heat H is transferred from an inner peripheral surface of the housing 2 to the outer peripheral surface of the bearing sheet 10 to heat the bearing sheet 10 housed in the inner chamber 4 to an appropriate temperature range (from an ordinary temperature to 200°C, preferably, from 50 to 100°C) to soften the bearing sheet 10, and the bearing sheet 10 is plastically deformed in such a manner that the outer peripheral surface of the bearing sheet 10 conforms to the inner peripheral surface of the housing 2 and the inner peripheral surface of the bearing sheet 10 conforms to the outer peripheral surface of the ball part 16. As a result, internal stress in the bearing sheet 10 becomes uniform to reduce the torque of the ball part 16.

As described above, the swaged part 11 is formed by deforming a portion of the intermediary body 20 by swaging that houses the bearing sheet 10 and the ball part 16 therein to configure the housing 2 holding the bearing sheet 10 where the ball part 16 is rotatably held. Then, the laser 23 is applied to the outer side part of the housing 2 to perform the heat treatment on a region including at least a portion of the swaged part 11. Accordingly, the hardened part 12 is formed in the region including at least the portion of the swaged part 11 of the housing 2 through quenching by means of application of the laser 23, thereby improving detachment strength. Furthermore, the transfer of heat resulting from the application of the laser 23 generates an annealing effect at the bearing sheet 10 held in the housing 2, thereby achieving torque reduction. In this way, detachment strength can be improved and torque can be reduced only through the heat treatment step of applying the laser 23. Thus, compared to a case of performing a quenching step (and a tempering step) and an annealing step individually, for example, it is possible to save space for the treatment and eliminate burden such as transfer between facilities for respective steps, making it possible to achieve both improvement of detachment strength and torque reduction while reducing man-hours (lead time) and cost.

As the laser 23 is applied after the swaged part 11 is formed at the housing 2, trouble such as the occurrence of a crack in the housing 2 by the swaging deformation does not occur compared to a case where swaging deformation is made after quenching by means of laser application.

Furthermore, as sufficient detachment strength can be obtained using the hardened part 12 formed by application of the laser 23, the size (thickness) of the housing 2 is not required to be increased. Thus, it is possible to provide the ball joint 1 having compactness and high strength.

As space can be saved for performing the heat treatment step using a simple configuration including the rotator on which the ball joint 1 is settable and the laser irradiator 22, it is possible to formulate an in-line system (consistent line system) easily and provide expectations for small-lot manufacture of the ball joints **1.**

By performing the heat treatment on the outer side part of the housing 2 by applying the laser 23 to the region including at least the portion of the swaged part 11 from the side of the opening part 3, it becomes possible to perform quenching directly and reliably on at least the portion of the swaged part 11.

By applying the laser 23 to the outer side part of the housing 2 along a perimeter thereof at least once while rotating the housing 2, it becomes possible to apply the laser 23 easily to the entire perimeter of the housing **2.**

The laser 23 is of a quadrangular shape having a width in at least one of the axis direction and the rotary direction of the housing **2.** Thus, it is possible to perform the heat treatment efficiently in a short time by adjusting the width (area) of the laser 23 in response to the size of the housing 2. This allows the heat treatment to be performed on one ball joint 1 in about 10 to 12 seconds, for example.

In particular, if the ball joint 1 is used for a rack end, large tensile force acts on the side of the swaged part 11 located on a tie rod side. Thus, forming the hardened part 12 in the region including at least the portion of the swaged part 11 makes it possible to make a large contribution to the improvement of detachment strength.

In one embodiment, the ball joint 1 may be any ball joint for a vehicle or an automobile and may be an outer ball joint (OBJ) or the like used for a tie rod end, for example.

The usage of the ball joint 1 is not limited to an automobile or a vehicle but the ball joint 1 may be used for any other equipment.

### Industrial Applicability

This invention is preferably applicable to a ball joint for a rack end of an automobile, for example.

### Reference Signs List

1 Ball joint
2 Housing
3 Opening part
10 Bearing sheet
11 Swaged part
16 Ball part
20 Intermediary body
23 Laser

## Claims

1. A ball joint manufacturing method of manufacturing a ball joint comprising a metallic housing having an opening part, a bearing sheet made of synthetic resin housed in the housing, and a ball part rotatably held by the bearing sheet,
wherein
a swaged part is formed by deforming a portion of an intermediary body by swaging that houses the bearing sheet and the ball part therein to configure the housing holding the bearing sheet where the ball part is rotatably held, and
a heat treatment is performed on a region including at least a portion of the swaged part by applying laser to an outer side part of the housing.

2. The ball joint manufacturing method according to claim **1,** wherein
the heat treatment is performed on the outer side part of the housing by applying the laser to the region including at least the portion of the swaged part from the side of the opening part of the housing.

3. The ball joint manufacturing method according to claim 1 or **2,** wherein
the laser is applied to the outer side part of the housing along a perimeter thereof at least once while the housing is rotated.

4. The ball joint manufacturing method according to claim **3,** wherein
the laser is of a quadrangular shape having a width in at least one of an axis direction and a rotary direction of the housing.
